# EUROPÄISCHE PATENTSCHRIFT

(11) **EP 4 405 611 B1**
(45) Veröffentlichungstag und Bekanntmachung des Hinweises auf die Patenterteilung: **29.10.2025**
(21) Anmeldenummer: 22789490.4
(22) Anmeldetag: 13.09.2022
(51) Int. Cl.: F16P 1/06, F16P 3/14, H02J 50/00

(54) **SICHERHEITSVORRICHTUNG UND VERFAHREN ZUR ÜBERWACHUNG EINES LICHTWEGS EINES LASERSTRAHLS UND DEREN ANWENDUNGEN**
SAFETY APPARATUS AND METHOD FOR MONITORING A LIGHT PATH OF A LASER BEAM, AND APPLICATIONS OF SAME
DISPOSITIF DE SÉCURITÉ ET PROCÉDÉ DE SURVEILLANCE D'UN TRAJET LUMINEUX D'UN FAISCEAU LASER ET APPLICATIONS Y RELATIVES

(30) Priorität: 22.09.2021 DE 102021124548
(43) Veröffentlichungstag der Anmeldung: 31.07.2024
(73) Patentinhaber: Max-Planck-Gesellschaft zur Förderung der Wissenschaften e.V., 80539 München (DE)
(72) Erfinder: KAUNERT, Karlheinz, 85748 Garching (DE); KURZAN, Bernd, 85748 Garching (DE)
(74) Vertreter: v. Bezold & Partner Patentanwälte - PartG mbB
(86) Internationale Anmeldenummer: PCT/EP2022/075416
(87) Internationale Veröffentlichungsnummer: WO 2023/046534

(56) Entgegenhaltungen:
- DE-A1- 102013 114 773

## Beschreibung

Die Erfindung betrifft eine Sicherheitsvorrichtung und ein Verfahren zur Überwachung eines Lichtwegs eines Laserstrahls und zur Unterbrechung des Laserstrahls in Reaktion auf eine Annäherung mindestens eines Gegenstands an den Laserstrahl. Die Erfindung betrifft auch eine mit der Sicherheitsvorrichtung ausgestattete Laservorrichtung und Anwendungen der Sicherheitsvorrichtung. Anwendungen der Erfindung sind z. B. beim Betrieb von Hochleistungslasern gegeben.

Es ist allgemein bekannt, dass der Betrieb eines Hochleistungslasers, z. B. zur Materialbearbeitung oder für die Anregung von Hochenergieprozessen, Maßnahmen zur Vermeidung unbeabsichtigter Schäden an Gegenständen und insbesondere bei einem Nutzer des Hochleistungslasers erfordert. Beispielsweise werden bei Betrieb des Fusionsexperiment ASDEX Upgrade in einem an einen Fusionsreaktor angrenzenden Raum YAG-Laser in Betrieb genommen und justiert, um Infrarot-Laserstrahlen in den Fusionsreaktor einzukoppeln und mittels Thomson-Streuung die Temperatur und die Dichte des Plasmas im Fusionsreaktor zu bestimmen. Die YAG-Laser der Laserklasse 4 haben z. B. eine gepulste Leistung von etwa 100 MW bei einer Wellenlänge von 1064 nm und eine Wiederholfrequenz von 20 Hz. Personen im Raum, wie z. B. technisches Personal, laufen bei aktivem Laser Gefahr, mit dem hochenergetischen, unsichtbaren Infrarot-Laserstrahl in Kontakt zu kommen. In dem sonst abgesperrten Raum herrscht zwar Schutzbrillenpflicht, jedoch bleiben z. B. die Haut der Personen oder ein anderer, in einen Strahlengang der Infrarot-Laserstrahlen eingeführter Gegenstand ungeschützt. Der Laser würde z. B. bei direktem Hautkontakt zu starken Verbrennungen führen und durch die intensive Infrarotstrahlung das Hautkrebsrisiko um ein Vielfaches erhöhen. Unter praktischen Arbeitsbedingungen grenzt die Verkehrsfläche im Raum direkt an z. B. fünf Laser-Austrittsöffnungen an, so dass ein erhebliches Risiko besteht, in einen aktiven Laser zu laufen oder bei Betriebsbeginn von einem der Laser in dessen Strahlengang zu stehen.

Aus DE 20 2008 007 465 U1 ist eine Laser-Lichtschranke mit einem Laserlicht-Überwachungssensor mit Zwangsaus- und Wiedereinschaltung bekannt, wobei die Laser-Lichtschranke mit einem modulierten Laser betrieben und der Laserlicht-Überwachungssensor zur Unterscheidung des modulierten Laser-Lichts von nicht-moduliertem Fremdlicht eingerichtet ist. Bei Erkennung einer Störung wird der Laser abgeschaltet und nach Wegfall der Störung wird der Laser wieder eingeschaltet. Dieser Laserlicht-Überwachungssensor wäre für Anwendungen mit Hochleistungslasern ungeeignet, da er erst anspricht, wenn der Strahlengang des Lasers durch einen Gegenstand unterbrochen wird und damit ein Schaden am Gegenstand nicht ausgeschlossen werden kann. Des Weiteren würde ein Aus- und Einschalten eines Hochleistungslasers mehr Zeit erfordern als das Schalten einer Lichtschranke, so dass es zu einer erheblichen Verzögerung des Betriebs des Hochleistungslasers kommen würde.

In DE 10 2018 104 317 A1, DE 10 2013 114 773 A1 und DE 696 33 293 T2 werden Vorrichtungen zur laserbasierten Energieübertragung mittels eines Energietransportstrahls hoher Leistung beschrieben. Die Vorrichtungen sind jeweils mit einer Sicherheitsvorrichtung ausgestattet, die einen Laserstrahl geringer Leistung parallel zu dem Energietransportstrahl erzeugt. Bei Annäherung eines Gegenstands an den Energietransportstrahls wird zunächst der Laserstrahl geringer Leistung unterbrochen und dadurch ein Steuersignal zur Reduzierung oder zum kompletten Abschalten der Laserquelle des Energietransportstrahls erzeugt. Diese Leistungsreduzierung der Laserquelle hat jedoch eine Reihe von Nachteilen in Bezug auf die die relativ lange Ansprechzeit der Sicherheitsvorrichtung und die Betriebsstabilität der Laserquelle. Für die Leistungsreduzierung wird typischerweise eine Zeit benötigt, innerhalb derer der Gegenstand bereits den Energietransportstrahl erreichen und dadurch beschädigt werden kann. Des Weiteren benötigt die Laserquelle nach der Leistungsreduzierung typischerweise einen größeren Regelaufwand, um den Betriebszustand vor der Leistungsreduzierung wieder zu erreichen. Ein weiterer Nachteil besteht in der Komplexität der optischen Komponenten zur Ausrichtung des Laserstrahls geringer Leistung.

Die Aufgabe der Erfindung ist es, eine verbesserte Sicherheitsvorrichtung und ein verbessertes Verfahren zur Überwachung eines Lichtwegs eines Laserstrahls und zur Unterbrechung des Laserstrahls in Reaktion auf eine Annäherung eines Gegenstands an den Laserstrahl bereitzustellen, mit denen Nachteile herkömmlicher Techniken vermieden werden. Mit der Erfindung soll insbesondere das Risiko von Schäden an Gegenständen, insbesondere Personen, durch eine Laser-Bestrahlung minimiert oder ausgeschlossen werden, eine Unterbrechung des Laserstrahls mit erhöhter Zuverlässigkeit und/oder verringerter Ansprechzeit ermöglicht werden und/oder eine Beendigung der Unterbrechung des Laserstrahls nach Entfernung des gefährdeten Gegenstandes beschleunigt werden. Die Aufgabe der Erfindung ist es auch, eine verbesserte Laservorrichtung bereitzustellen, die mit der Sicherheitsvorrichtung ausgestattet ist und mit der Nachteile herkömmlicher Techniken vermieden werden.

Diese Aufgaben werden durch eine Sicherheitsvorrichtung, ein Verfahren bzw. eine Laservorrichtung gelöst, welche die Merkmale der unabhängigen Ansprüche aufweisen. Bevorzugte Ausführungsformen und Anwendungen der Erfindung ergeben sich aus den abhängigen Ansprüchen.

Gemäß einem ersten allgemeinen Gesichtspunkt der Erfindung wird die obige Aufgabe durch eine Sicherheitsvorrichtung gelöst, die zur Überwachung eines Lichtwegs eines Laserstrahls und zur Unterbrechung des Laserstrahls in Reaktion auf eine Annäherung eines Gegenstands an den Laserstrahl eingerichtet ist. Die Sicherheitsvorrichtung umfasst mindestens eine Lichtschrankeneinrichtung mit einer Lichtquelleneinrichtung, die zur Erzeugung eines Sicherheits-Lichtfeldes angeordnet ist, das sich entlang einer Längsachse erstreckt, die parallel zu dem Lichtwegs des Laserstrahls verläuft, und mit einer Sensoreinrichtung, die mindestens ein Sensorelement (Sensorfeld) aufweist und zur Detektion des Sicherheits-Lichtfeldes und Erzeugung eines Sensorsignals angeordnet ist, das durch eine zumindest teilweise Abdeckung des Sicherheits-Lichtfeldes durch den Gegenstand veränderlich ist. Die Sicherheitsvorrichtung umfasst des Weiteren eine Unterbrechereinrichtung, die mit der mindestens einen Lichtschrankeneinrichtung gekoppelt und zur Unterbrechung des Laserstrahls in Abhängigkeit von einer Änderung des Sensorsignals der mindestens einen Lichtschrankeneinrichtung angeordnet ist. Die Unterbrechereinrichtung ist insbesondere dazu eingerichtet, den Laserstrahl mit mechanischen Mitteln, zum Beispiel einem Strahlblockierer, abzuschirmen. Die Änderung des Sensorsignals kann z. B. mit einer Steuereinrichtung erfasst werden, die zur Ansteuerung der Unterbrechereinrichtung angeordnet ist. Das Sicherheits-Lichtfeld der mindestens einen Lichtschrankeneinrichtung erstreckt sich vorzugsweise entlang der gesamten freien Länge des Lichtwegs des Laserstrahls, wo eine Einführung eines Gegenstands in den Lichtweg möglich wäre.

Gemäß einem zweiten allgemeinen Gesichtspunkt der Erfindung wird die obige Aufgabe durch eine Laservorrichtung gelöst, welche eine Laserquelleneinrichtung, die zur Erzeugung eines Laserstrahls entlang eines Lichtwegs eingerichtet ist, und die Sicherheitsvorrichtung gemäß dem ersten allgemeinen Gesichtspunkt der Erfindung oder einer ihrer Ausführungsformen umfasst und die zur Überwachung des Lichtwegs des Laserstrahls und zur Unterbrechung des Laserstrahls in Reaktion auf eine Annäherung eines Gegenstands an den Laserstrahl angeordnet ist. Vorzugsweise sind die Lichtquelleneinrichtung der mindestens einen Lichtschrankeneinrichtung und die Unterbrechereinrichtung Teil der Laserquelleneinrichtung und/oder mit dieser fest gekoppelt.

Gemäß einem dritten allgemeinen Gesichtspunkt der Erfindung wird die obige Aufgabe durch ein Verfahren zur Überwachung eines Lichtwegs eines Laserstrahls und zur Unterbrechung des Laserstrahls in Reaktion auf eine Annäherung eines Gegenstands an den Laserstrahl, wobei die Sicherheitsvorrichtung gemäß dem ersten allgemeinen Gesichtspunkt der Erfindung oder einer ihrer Ausführungsformen verwendet wird. Das Verfahren umfasst die Schritte Erzeugung des mindestens einen Sicherheits-Lichtfeldes und Erfassung des mindestens einen Sensorsignals, das einem ungestörten Sicherheits-Lichtfeld entspricht, mit der mindestens einen Lichtschrankeneinrichtung, und Betätigung der Unterbrechereinrichtung bei einer Änderung des mindestens einen Sensorsignals in Folge einer zumindest teilweisen Abdeckung des mindestens einen Sicherheits-Lichtfeldes durch den Gegenstand, so dass der Laserstrahl unterbrochen wird.

Gemäß einem vierten allgemeinen Gesichtspunkt der Erfindung wird die obige Aufgabe durch die Anwendung der Sicherheitsvorrichtung gemäß dem ersten allgemeinen Gesichtspunkt der Erfindung oder einer ihrer Ausführungsformen zur Sicherung einer Betriebsfläche zwischen mindestens einer Laserquelleneinrichtung und einem Fusionsreaktor gelöst.

Vorteilhafterweise wird mit der Erfindung ein neues Sicherheitssystem geschaffen, das einen Laserstrahl, wie z. B. den Strahl eines Hochleistungslasers, insbesondere eines YAG-Lasers, nahezu instantan, insbesondere innerhalb von weniger als 10 ms, abschirmen kann, wenn ein Gegenstand, insbesondere eine Person, sich dem Laserstrahl nähert. Das Sicherheits-Lichtfeld der mindestens einen Lichtschrankeneinrichtung ist so angeordnet, dass ein Gegenstand das Sicherheits-Lichtfeld mindestens teilweise unterbricht, bevor er den Laserstrahl erreichen kann. Mit dem Sicherheits-Lichtfeld wird eine Schutzzone geschaffen, deren Verletzung die Unterbrechung des Laserstrahls auslöst. Die Lichtquelleneinrichtung erzeugt das Sicherheits-Lichtfeld im sichtbaren oder infraroten Spektralbereich mit einer Leistung, die für den Gegenstand unkritisch ist.

Die Erfindung erlaubt ein Maximum an Flexibilität und Sicherheit bei der Arbeit mit hochenergetischen Lasern in allen Einsatzbereichen. Ein Schaden am Gegenstand, der das Sicherheits-Lichtfeld unterbricht, ist ausgeschlossen. Der Erfinder hat festgestellt, dass das Sicherheits-Lichtfeld so dimensioniert werden kann, dass der abzuschirmende Laserstrahl schnell genug unterbrochen wird, um einen Schaden am Gegenstand zu verhindern, selbst wenn sich der Gegenstand bewegt. Die Unterbrechung des Laserstrahls erfolgt mit erhöhter Zuverlässigkeit, da die Sicherheitsvorrichtung eine Lichtschranke mit einer Schaltwirkung für den Laserstrahl bildet. Die Unterbrechung des Laserstrahls nach Entfernung des gefährdeten Gegenstandes kann beschleunigt werden, da der Laserstrahl nicht zwingend abgeschaltet, sondern mit mechanischen Mitteln abgeschirmt werden kann.

Gemäß einer bevorzugten Ausführungsform der Erfindung ist die Lichtquelleneinrichtung zur Erzeugung des Sicherheits-Lichtfeldes in Gestalt eines Strahltubus eingerichtet, der sich entlang der Längsachse erstreckt und den freien Lichtweg des Laserstrahls radial mindestens halbseitig, besonders bevorzugt allseitig, umgibt. Das Sicherheits-Lichtfeld bildet den Strahltubus derart, dass der Lichtweg des Sicherheits-Lichtfelds sich ausschließlich an der Oberfläche (oder einer Oberflächenschicht) des Strahltubus erstreckt oder dass das Sicherheits-Lichtfeld das gesamte Volumen des Strahltubus ausfüllt. Vorteilhafterweise liefert der Strahltubus eine den Laserstrahl mindestens in einem Halbraum umhüllende Schutzzone. Die Ausrichtung des Halbraums kann in Abhängigkeit von den konkreten Anwendungsbedingungen gewählt werden. Ein den Laserstrahl radial allseitig umgebender Strahltubus hat den Vorteil, dass mit diesem eine Annäherung aus jeder radialen Richtung erfasst werden kann.

Besonders bevorzugt hat der Strahltubus die Form eines geraden Kreiszylinders oder eine Konusform. Beide Formen haben einen kreisrunden Querschnitt, so dass sich Vorteile in Bezug auf die Strahlformung mit verfügbaren Optiken ergeben. Im Fall eines Kreiszylinders ist das Sicherheits-Lichtfeld parallel zum Laserstrahl ausgerichtet. Die Konusform bedeutet, dass das Sicherheits-Lichtfeld divergent, z. B. von der Lichtquelleneinrichtung beginnend sich verjüngend oder verbreiternd, geformt ist. Mit der Konusform kann das Sicherheits-Lichtfeld beispielsweise an eine optional vorgesehene divergente Form des Laserstrahls angepasst werden. Alternativ kann der Strahltubus eine andere Form, z. B. mit einem ellipsoiden Querschnitt oder sogar mit einem an ein Rechteck angenäherten Querschnitt haben.

Alternativ zur Gestalt des halbseitigen bis vollständigen Strahltubus kann das Sicherheits-Lichtfeld eine Querschnittsform aufweisen, die sich in Bezug auf den Lichtweg des Laserstrahls radial über mindestens einen Winkelabschnitt kleiner als 180° bis zu wenigen Grad, z. B. 5°, erstreckt. Das Sicherheits-Lichtfeld kann entlang des Lichtwegs ein- oder mehrseitig z. B. so geformt sein, dass es mehrere radiale Winkelabschnitte gleicher oder verschiedener Winkelbeträge abdeckt. Vorteilhafterweise kann somit das Sicherheits-Lichtfeld an konkrete Anwendungsbedingungen angepasst und z. B. auf bestimmte Raumbereiche beschränkt werden, in denen sich ein Gegenstand oder mehrere Gegenstände an den Laserstrahl annähern kann.

Die Lichtquelleneinrichtung kann einen justierbaren Fokus oder einen festen Fokus aufweisen. Vorzugsweise weist die Lichtquelleneinrichtung eine einzelne Lichtquelle mit einem divergenten Strahlenfeld und eine Strahlformereinrichtung auf, die zur Formung des Sicherheits-Lichtfeldes aus dem divergenten Strahlenfeld eingerichtet ist. Die Verwendung einer einzelnen Lichtquelle hat den Vorteil, dass ein Defekt oder eventuelle Leistungsschwankungen der Lichtquelle sich auf das gesamte Sicherheits-Lichtfeld auswirken. Eine Veränderung des Sensorsignals durch eine Leistungsschwankung der Lichtquelle kann leichter erkannt und von einer Einführung eines Gegenstands in das Sicherheits-Lichtfeld unterschieden werden.

Besonders bevorzugt ist bei Verwendung der einzelnen Lichtquelle eine Konfiguration vorgesehen, bei der die Strahlformereinrichtung eine Spiegelanordnung mit einem Umlenkspiegel und einem Kollimationsspiegel aufweist und die Lichtquelle radial von der Längsachse beabstandet angeordnet ist, wobei der Umlenkspiegel zur Umlenkung des divergenten Strahlenfeldes der Lichtquelle hin zu der Längsachse und der Kollimationsspiegel zur Formung des Sicherheits-Lichtfeldes parallel oder divergent relativ zu der Längsachse angeordnet ist. Der Umlenkspiegel ist z. B. ein ebener Spiegel mit einer Spiegelfläche in Gestalt eines Kreis- oder Ellipsenrings. In der Mitte des Umlenkspiegels ist eine Öffnung vorgesehen, durch die der Laserstrahl durchtritt.

Alternativ kann die Lichtquelleneinrichtung eine Vielzahl von Lichtquellen umfassen, die zur Formung des Sicherheits-Lichtfeldes angeordnet sind. Bei dieser Ausführungsform können sich Vorteile für die Formung des Sicherheits-Lichtfeldes, indem beispielsweise auf eine Strahlformereinrichtung verzichtet oder eine Strahlformereinrichtung mit einem vereinfachten Aufbau verwendet werden kann. Wenn mehrere Lichtquellen vorgesehen sind, ist die Sensoreinrichtung vorzugsweise mit einem Sensorelement pro Lichtquelle ausgestattet, wobei die Sensorelemente besonders bevorzugt in Reihe geschaltet sind. Durch die Reihenschaltung würde ein Defekt oder eine Leistungsschwankung von mindestens einer der Lichtquellen bewirken, dass die Unterbrechereinrichtung betätigt wird, so dass der Defekt oder die Leistungsschwankung leicht erkannt werden können.

Gemäß weiteren Varianten der Erfindung kann die Lichtquelleneinrichtung mindestens eine Lichtquelle und eine Vielzahl von Glasfasern umfassen. Die Glasfasern sind jeweils an einem ersten Ende mit der mindestens einen Lichtquelle gekoppelt. Jeweils entgegengesetzte, zweite Enden der Glasfasern sind zur Formung des Sicherheits-Lichtfeldes auf einen Faserkollimator gerichtet und kreisförmig angeordnet. Mit dem Faserkollimator werden divergente Strahlen am Austrittspunkt jeder einzelnen Glasfaser parallel ausgerichtet.

Es kann beispielsweise eine einzige Lichtquelle mit allen Glasfasern gekoppelt sein, oder einzelne Glasfasern oder Gruppen von Glasfasern können jeweils mit einer Lichtquelle von mehreren Lichtquellen gekoppelt sein. Die Kombination der mindestens einen Lichtquelle und mit den Glasfasern hat den Vorteil, dass die mindestens eine Lichtquelle mit einem Abstand von der Sicherheitsvorrichtung, z. B. in einem getrennten Raum angeordnet sein kann. Die Position der mindestens einen Lichtquelle ist nicht an eine optische Achse gebunden. Es kann eine einzige Lichtquelle für mehrere Sicherheitsvorrichtungen vorgesehen sein.

Die mindestens eine Lichtquelle der Lichtquelleneinrichtung ist vorzugsweise ein Laser mit einer Emission im sichtbaren Spektralbereich (so genannter Schutzlaser). Laser haben Vorteile aufgrund der gerichteten, parallelen oder divergenten Abstrahlung der Emission und ihrer hohen Leistung. Alternativ kann die mindestens eine Lichtquelle eine Leuchtdiode umfassen.

Gemäß einer bevorzugten Ausführungsform der Erfindung weist die Sensoreinrichtung eine lichtempfindliche Sensorfläche auf, die an eine Querschnittsform des Sicherheits-Lichtfeldes angepasst ist. Vorteilhafterweise wird damit die Erfassung von störendem Fremdlicht minimiert und die Zuverlässigkeit der Unterbrechung des Laserstrahls in Reaktion auf eine Annäherung eines Gegenstands an den Laserstrahl erhöht. Besonders bevorzugt hat die lichtempfindliche Sensorfläche der Sensoreinrichtung die Form eines halben Kreisrings, vorzugsweise eines kompletten Kreisrings.

Weitere Vorteile der Erfindung ergeben sich aus der Vielzahl verfügbarer lichtempfindlicher Elemente, die das mindestens eine Sensorelement der Sensoreinrichtung bilden. Gemäß einer ersten Variante kann das mindestens eine Sensorelement einen Photowiderstand umfassen. Die Verwendung eines Photowiderstands hat Vorteile in Bezug auf die Kosten, die Verarbeitung des Ausgangssignals und die Anpassung der Sensorfläche an die Querschnittsform des Sicherheits-Lichtfeldes. Gemäß einer ersten Variante kann das mindestens eine Sensorelement eine Photodiode umfassen. In diesem Fall können sich Vorteile in Bezug auf die Empfindlichkeit der Erfassung des Sicherheits-Lichtfeldes ergeben.

Gemäß einer weiteren Variante der Erfindung kann das mindestens eine Sensorelement mit einem Strahlsammler ausgestattet sein, der zur Sammlung des Sicherheits-Lichtfeldes am mindestens einen Sensorelement eingerichtet ist. Der Strahlsammler ist ein optisches, vorzugsweise reflektierendes Bauteil, das Teile des Sicherheits-Lichtfeldes, besonders bevorzugt alle Teilstrahlen der Oberfläche oder Oberflächenschicht des genannten Strahltubus, auf die Sensorfläche der Sensoreinrichtung lenkt.

Gemäß einer weiteren vorteilhaften Ausführungsform der Erfindung ist vorgesehen, dass die Sensoreinrichtung eine Vielzahl von in Reihe geschalteten Sensorelementen aufweist. Damit wird ermöglicht, dass die Sensoreinrichtung ein einziges Sensorsignal bereitstellt, wodurch die Auswertung der Ausgabe der Sensoreinrichtung vereinfacht wird.

Weitere Vorteile in Bezug auf die Vermeidung der Erfassung von Fremdlicht und die erhöhte Zuverlässigkeit der Sicherheitsvorrichtung werden erzielt, wenn die Sensoreinrichtung gemäß einer weiteren Variante der Erfindung eine Streulichtblende aufweist, die sich an einem Endabschnitt des Sicherheits-Lichtfeldes an der Sensoreinrichtung entlang der Längsachse erstreckt und zur Abschirmung des Sicherheits-Lichtfeldes gegenüber Umgebungslicht eingerichtet ist. Die Streulichtblende hat z. B. die Gestalt von einem Hohlzylinders oder Hohlkonus mit einer Achse parallel zum Lichtweg des Laserstrahls oder von zwei verschachtelten Hohlzylinders oder Hohlkonus, die das Sicherheits-Lichtfeld in deren Endabschnitt einschließen.

Gemäß einer bevorzugten Ausführungsform der Erfindung weist die Unterbrechereinrichtung einen Strahlblockierer und eine Antriebseinrichtung auf, die mit der Sensoreinrichtung gekoppelt ist, wobei der Strahlblockierer mit der Antriebseinrichtung in Abhängigkeit vom Sensorsignal der Sensoreinrichtung in den oder aus dem Lichtweg des Laserstrahls beweglich, insbesondere schwenkbar ist. Der Strahlblockierer ist ein massiver Gegenstand, der den Laserstrahl vorzugsweise im Raum streut (Volumenstreuer). Der Strahlblockierer ist zwischen einem Zustand, in dem er den Lichtweg des Laserstrahls freigibt, und einem Zustand, in dem er den Lichtweg des Laserstrahls unterbricht, verstellbar. Vorteilhafterweise ermöglicht der mechanisch betriebene Strahlblockierer eine schnelle Unterbrechung und Freigabe des Laserstrahls, ohne dass die Laserquelleneinrichtung zur Erzeugung des Laserstrahls abgeschaltet werden muss. Es kann insbesondere die Beendigung der Unterbrechung des Laserstrahls nach Entfernung des gefährdeten Gegenstandes beschleunigt werden, so dass unerwünschte Verzögerungen bei Betrieb der Laserquelleneinrichtung vermieden werden.

Vorteilhafterweise ist eine Vielzahl von Gestaltungsvarianten des Strahlblockierers verfügbar, die in Abhängigkeit von den konkreten Anwendungsbedingungen und insbesondere der Wellenlänge des Laserstrahls gewählt werden können. Gemäß einer ersten Variante kann der Strahlblockierer aus einem Kunst-Schaumstoff hergestellt sein. Schaumstoffe sind vorteilhafterweise leicht und damit einfach in den Lichtweg des Laserstrahls schwenkbar. Des Weiteren können Schaumstoffe das Feld des Laserstrahls einfach im Raum streuen.

Alternativ oder zusätzlich kann der Strahlblockierer aus einem klaren, nicht-absorbierenden lichtdurchlässigen Kunststoff, wie z. B. PET-Schaum (Polyethylenterephthalat-Schaum) hergestellt sein, was für die Anwendung der Erfindung zur Unterbrechung von einem Laserstrahl mit einer Wellenlänge im Infrarotbereich von Vorteil ist.

Der Strahlblockierer kann gemäß einer weiteren Variante aus PTFE, insbesondere PTFE-Schaum oder PTFE-Vollmaterial, hergestellt sein. PTFE hat Vorteile in Bezug auf die Haltbarkeit des Strahlblockierers, da PTFE eine Temperaturbeständigkeit bis etwa 380 °C aufweist.

Vorzugsweise hat der Strahlblockierer die Gestalt eines Hohlzylinders, der um eine Querachse senkrecht zur Längsachse so verschwenkbar ist, dass der Strahlblockierer in einem unverschwenkten Zustand den Lichtweg des Laserstrahls freigibt und in einem verschwenkten Zustand den Lichtweg des Laserstrahls blockiert. Im unverschwenkten Zustand ist der Strahlblockierer so angeordnet, dass der Laserstrahl durch den Hohlzylinder frei verläuft. Im verschwenkten Zustand ist die Achse des Hohlzylinders gegenüber der Längsachse des Laserstrahls so verdreht, dass das Material des Hohlzylinders vom Laserstrahl getroffen wird. Mit der Hohlzylinder-Form wird die Geschwindigkeit der Unterbrechung und Freigabe des Laserstrahls vorteilhafterweise erhöht, da bei Drehung des Hohlzylinders dessen Material radial von zwei Seiten in den Laserstrahl geführt wird.

Alternativ kann der Strahlblockierer separat von der Sicherheitsvorrichtung in der Laserquelleneinrichtung zur Erzeugung des Laserstrahls angeordnet sein. Der Strahlblockierer kann z. B. einen in der Laserquelleneinrichtung enthaltenen Shutter umfassen. Diese Variante hätte Vorteile aufgrund der kompakten Integration des Strahlblockierers in die Laserquelleneinrichtung.

Gemäß einer abgewandelten Variante kann als Strahlblockierer eine Irisblende vorgesehen sein, die mit der Antriebseinrichtung in Abhängigkeit vom Sensorsignal der Sensoreinrichtung zwischen einem geöffneten Zustand und einem geschlossenen Zustand verstellbar ist. Die Irisblende kann Vorteile aufgrund ihres geringen Platzbedarfes haben. Gemäß einer weiteren Variante kann als Strahlblockierer eine Metallplatte mit einer streuenden Oberfläche, z. B. eine sandgestrahlte Metallplatte vorgesehen sein.

Gemäß einem weiteren bevorzugten Merkmal der Erfindung weisen die mindestens eine Lichtschrankeneinrichtung und die Unterbrechereinrichtung sich axial erstreckende Durchgangsöffnungen auf, die den Lichtweg des Laserstrahls frei lassen. Diese Ausführungsform der Erfindung hat besondere Vorteile für einen kompakten Aufbau der Sicherheitsvorrichtung.

Die Lichtquelleneinrichtung und die Sensoreinrichtung der Sicherheitsvorrichtung können gemäß einer bevorzugten Ausführungsform der Erfindung mit einem gegenseitigen Abstand angeordnet sein, der den zu schützenden Raum einschließt, in dem ein Gegenstand in den Laserstrahl eingeführt werden könnte. Der Lichtweg des Sicherheits-Lichtfeldes erstreckt sich in einem einzigen Richtungssinn von der Lichtquelleneinrichtung zu der entfernten Sensoreinrichtung. Beispielsweise können jeweils eine von der Lichtquelleneinrichtung und der Sensoreinrichtung unmittelbar angrenzend zur Unterbrechereinrichtung und zur Laserquelleneinrichtung bzw. unmittelbar angrenzend zu einem Raum zur Anwendung des Laserstrahls, z. B. einem Fusionsreaktor oder einem anderen Bestrahlungsplatz, angeordnet sein.

Alternativ können die Lichtquelleneinrichtung und die Sensoreinrichtung zueinander benachbart angeordnet sein. In diesem Fall ist ein Ringspiegel vorgesehen, mit dem der Lichtweg des Sicherheits-Lichtfeldes gefaltet wird, und die Lichtquelleneinrichtung und die Sensoreinrichtung einerseits und der Ringspiegel andererseits sind mit einem gegenseitigen Abstand angeordnet, der den zu schützenden Raum einschließt, in dem ein Gegenstand in den Laserstrahl eingeführt werden könnte. Entsprechend sind gemäß dieser Ausführungsform der Erfindung die Lichtquelleneinrichtung, der Ringspiegel und die Sensoreinrichtung derart angeordnet, dass sich das Sicherheits-Lichtfeld von der Lichtquelleneinrichtung über den Ringspiegel zu der Sensoreinrichtung erstreckt. Die Ausführungsform unter Verwendung des Ringspiegels hat Vorteile, wenn am Ende des überwachten Lichtweges des Laserstrahls, z. B. aufgrund von physikalischen Vorgängen am Bestrahlungsplatz, elektromagnetische Felder auftreten, die den Betrieb der Sensoreinrichtung oder die Übertragung des Sensorsignals stören könnten. Dies ist z. B. bei Fusionsanlagen mit magnetischem Plasma-Einschluss der Fall.

Der Ringspiegel ist allgemein ein ebener oder bei Bedarf für Strahlformungszwecke gekrümmter Spiegel mit einer zentralen Öffnung, durch die der Laserstrahl durchtritt, z. B. ein Kreisringspiegel. Die Lichtquelleneinrichtung und die Sensoreinrichtung können in einer gemeinsamen Einheit verbaut sein. Der Lichtweg des Sicherheits-Lichtfeldes verläuft mit wechselndem Richtungssinn von der Lichtquelleneinrichtung zu dem entfernten Ringspiegel und von diesem zu der Sensoreinrichtung in der Nähe oder unmittelbar angrenzend zur Lichtquelleneinrichtung.

Gemäß einer weiteren Variante der Erfindung ist die Lichtquelleneinrichtung für einen modulierten Betrieb derart konfiguriert, dass dem Sicherheits-Lichtfeld eine Modulation aufgeprägt wird, und die Sensoreinrichtung mit einer Auswertungseinrichtung gekoppelt, die zur Erfassung der Modulation des Sicherheits-Lichtfeldes und zur Erzeugung des Sensorsignals nur dann eingerichtet ist, wenn die Modulation des Sicherheits-Lichtfeldes erfasst wird. Die Auswertungseinrichtung ist z. B. in einer mit der Sensoreinrichtung gekoppelten Computerschaltung oder in der Steuereinrichtung zur Ansteuerung der Unterbrechereinrichtung enthalten. Vorteilhafterweise wird damit eine intelligente Lichtschranke geschaffen, deren Sensor nur auf moduliertes Licht anspricht. Wenn mehrere Laserstrahlen überwacht werden, könnte mit jeder Lichtquelleneinrichtung eine spezifische Modulation erzeugt werden, die nur von der zugehörigen Sensoreinrichtung erfasst werden kann. So könnte von einer Sensoreinrichtung auch das Licht einer benachbarten Lichtquelleneinrichtung als Umgebungslicht erkannt werden.

Vorteilhafterweise kann die Sicherheitsvorrichtung gemäß einer bevorzugten Ausführungsform der Erfindung mit einer einzigen Lichtschrankeneinrichtung ausgestattet sein, wobei die Lichtquelleneinrichtung und die Sensoreinrichtung an den Enden eines zu überwachenden Lichtwegs des Laserstrahls angeordnet sind. Bei dieser Ausführungsform sind eine einzige Lichtquelleneinrichtung und eine einzige Sensoreinrichtung vorgesehen, wodurch die Sicherheitsvorrichtung vorteilhafterweise einen geringen Platzbedarf hat. Besonders bevorzugt erstreckt sich der zu überwachende Lichtweg durch den gesamten freien Raum von der Laserquelleneinrichtung zur Erzeugung des Laserstrahls bis zu einem Anwendungsort des Laserstrahls, wie z. B. einem Bestrahlungsplatz oder gemäß der bevorzugten Anwendung der Erfindung zu dem Fusionsreaktor.

Gemäß einer alternativen Ausführungsform der Erfindung kann die Sicherheitsvorrichtung mit mindestens zwei Lichtschrankeneinrichtungen ausgestattet sein, die aufeinander folgend am zu überwachenden Lichtweg des Laserstrahls angeordnet sind, wobei die Lichtquelleneinrichtung und die Sensoreinrichtung von jeder der mindestens zwei Lichtschrankeneinrichtungen an den Enden jeweils eines Teilstücks des Sicherheits-Lichtfeldes des zu überwachenden Lichtwegs des Laserstrahls angeordnet sind, wobei die Unterbrechereinrichtung mit jeder Lichtschrankeneinrichtung gekoppelt und zur Unterbrechung des Laserstrahls in Abhängigkeit von einer Änderung des Sensorsignals von mindestens einer der Lichtschrankeneinrichtungen angeordnet ist. Diese Ausführungsform bietet Vorteile, wenn besonders lange Lichtwege überwacht werden sollen. Durch die Unterteilung in kürzere Teilstücke mit jeweils einer Lichtschrankeneinrichtung wird die Justierung der Lichtschrankeneinrichtungen vereinfacht, die Schwingungsempfindlichkeit der Lichtschrankeneinrichtungen verringert, Wirkungen einer möglicherweise bestehenden Divergenz des Sicherheits-Lichtfeldes vermindert und die Zuverlässigkeit der Überwachung des Lichtwegs verbessert.

Besonders bevorzugt erstrecken sich alle Teilstücke des zu überwachenden Lichtwegs aneinander gereiht durch den gesamten freien Raum von der Laserquelleneinrichtung zur Erzeugung des Laserstrahls bis zu dem Anwendungsort des Laserstrahls, wie z. B. dem Bestrahlungsplatz oder dem Fusionsreaktor.

Bei der Ausführungsform mit zwei oder mehr Lichtschrankeneinrichtungen sind diese vorzugsweise unmittelbar aneinandergrenzend angeordnet, so dass entlang dem zu überwachenden Lichtweg des Laserstrahls die Sensoreinrichtung der zweiten oder jeder weiteren Lichtschrankeneinrichtung direkt neben der Lichtquelleneinrichtung der jeweils vorhergehenden Lichtschrankeneinrichtung positioniert oder mit dieser sogar fest verbunden ist. Alternativ kann zwischen mindestens zwei der Lichtschrankeneinrichtungen ein Abstand vorgesehen sein, in dem beispielsweise eine radiale Abschirmung des Laserstrahls vorhanden ist oder eine optische Einrichtung, wie z. B. eine Strahldiagnostik angeordnet ist.

Sowohl bei der Ausführungsform mit einer einzigen Lichtschrankeneinrichtung als auch bei der Ausführungsform mit zwei oder mehr Lichtschrankeneinrichtungen kann der zu überwachende Lichtweg durchgehend gerade oder mit mindestens einem Spiegel gewinkelt konfiguriert sein. Bei der Variante mit einem gewinkelten Lichtweg kann es von Vorteil sein, jeweils gerade Abschnitte des gewinkelten Lichtwegs als Teilstücke des Lichtwegs mit Lichtschrankeneinrichtungen auszustatten. Des Weiteren kann auch die Sicherheitsvorrichtung mit mindestens zwei Lichtschrankeneinrichtungen mit einem gefalteten Lichtweg von mindestens einer der Lichtschrankeneinrichtungen konfiguriert sein.

Die in Zusammenhang mit der Sicherheitsvorrichtung und ihren Ausführungsformen offenbarten Merkmale stellen ebenfalls bevorzugte Merkmale des erfindungsgemäßen Verfahrens und der erfindungsgemäßen Laservorrichtung dar und umgekehrt. Die vorgenannten Aspekte und erfinderischen und bevorzugten Merkmale, insbesondere hinsichtlich des Aufbaus der Sicherheitsvorrichtung sowie der Abmessungen und Zusammensetzungen der einzelnen Komponenten, die in Zusammenhang mit der Sicherheitsvorrichtung beschrieben werden, gelten daher auch für das Verfahren. Die oben beschriebenen bevorzugten Ausführungsformen, Varianten und Merkmale der Erfindung sind miteinander kombinierbar.

Weitere Einzelheiten und Vorteile der Erfindung werden im Folgenden unter Bezug auf die beigefügten Zeichnungen beschrieben. Es zeigen schematisch:
- Figur 1:: eine Schnittansicht einer ersten Ausführungsform der Sicherheitsvorrichtung gemäß der Erfindung mit einem ungestörten Sicherheits-Lichtfeld;
- Figur 2:: eine Schnittansicht der ersten Ausführungsform der Sicherheitsvorrichtung gemäß Figur 1 mit einem unterbrochenen Sicherheits-Lichtfeld;
- Figur 3:: eine Perspektivansicht einer Ausführungsform der Laservorrichtung gemäß der Erfindung mit einer Sicherheitsvorrichtung gemäß Figur 1;
- Figuren 4 und 5:: Draufsichten auf die Unterbrechereinrichtung der Sicherheitsvorrichtung gemäß Figur 1 im offenen und im blockierten Zustand;
- Figur 6:: ein Schaltbild einer Steuereinrichtung zur Ansteuerung der Unterbrechereinrichtung;
- Figur 7: eine Schnittansicht einer zweiten Ausführungsform der Sicherheitsvorrichtung gemäß der Erfindung mit einem gewinkelten Lichtweg des überwachten Laserstrahls;
- Figur 8: eine Schnittansicht einer dritten Ausführungsform der Sicherheitsvorrichtung gemäß der Erfindung mit einem gefalteten Sicherheits-Lichtfeld; und
- Figuren 9 und 10:: Ausführungsformen der Sicherheitsvorrichtung gemäß der Erfindung mit mehreren Lichtschrankeneinrichtungen.

Ausführungsformen der Erfindung werden im Folgenden unter beispielhaftem Bezug auf eine Anwendung der Erfindung zur Überwachung von Hochleistungs-Infrarot-Lasern beschrieben, die für Messzwecke an einem Fusionsreaktor, wie z. B. dem Fusionsexperiment ASDEX Upgrade, betrieben werden. Die Erfindung ist nicht auf diese Anwendung beschränkt, sondern zur Überwachung von anderen Lasern entsprechend realisierbar. Einzelheiten der Lasereinrichtung zur Erzeugung des überwachten Laserstrahls werden nicht beschrieben, da diese von herkömmlichen Lasern, wie z. B. YAG- oder CO₂-Lasern an sich bekannt sind. Abweichend von den Illustrationen kann die Lichtquelleneinrichtung eine Kombination aus einer oder mehreren Lichtquelle(n) und eine Vielzahl von Glasfasern mit einem Faserkollimator zur Formung des Sicherheits-Lichtfeldes umfassen.

Es wird betont, dass die Zeichnungen schematische Illustrationen sind. In der praktischen Anwendung werden in der Regel andere Dimensionsverhältnisse, insbesondere größere Längen des überwachten Lichtwegs des Laserstrahls, wie z. B. bis zu 20 m oder mehr, realisiert.

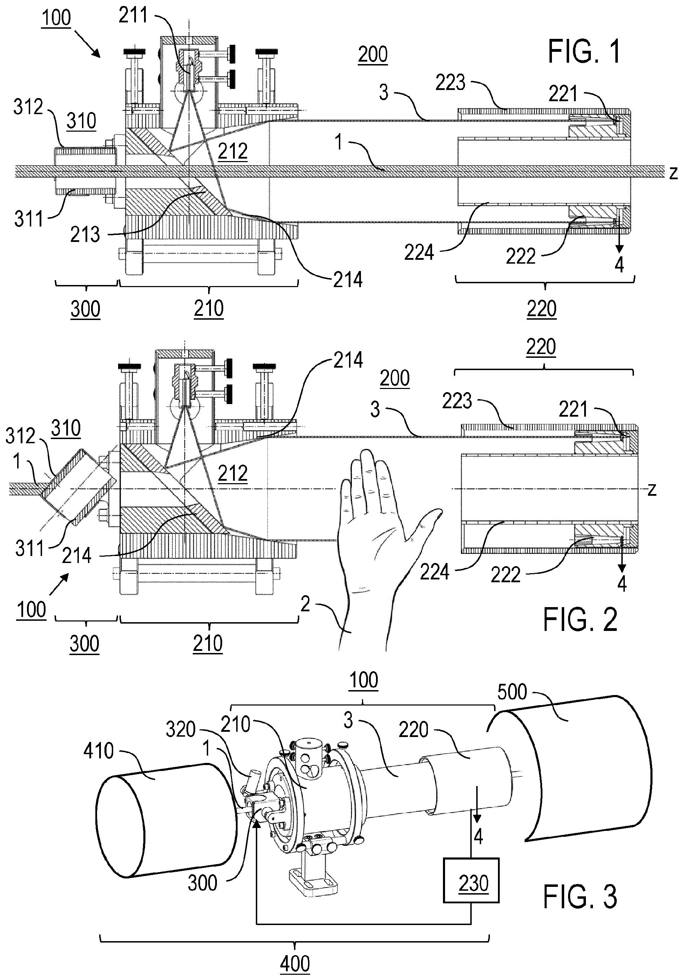

Die Figuren 1 und 2 zeigen eine erste Ausführungsform der Sicherheitsvorrichtung 100 mit einer Lichtschrankeneinrichtung 200 und einer Unterbrechereinrichtung 300. Die Sicherheitsvorrichtung 100 ist zur Überwachung des Lichtwegs des Laserstrahls 1 vorgesehen, der sich in einer geraden Raumrichtung (z-Richtung) erstreckt. Figur 3 illustriert eine mit einer Laserquelleneinrichtung 410 und der Sicherheitsvorrichtung 100 ausgestattete Laservorrichtung 400. Der Laserstrahl 1 wird mit der Laserquelleneinrichtung 410 erzeugt, die in den Figuren 1 und 2 nicht dargestellt ist. Figur 3 illustriert eine Hauptanwendung der Erfindung, bei der Laserquelleneinrichtung 410 einen YAG-Laser, z. B. mit einer Ausgangsenergie von 3 Joule, umfasst, dessen Laserstrahl 1, z. B. für Diagnostikzwecke, in einen Fusionsreaktor 500 eingekoppelt wird.

Die Lichtschrankeneinrichtung 200 der Sicherheitsvorrichtung 100 gemäß den Figuren 1 und 2 umfasst eine Lichtquelleneinrichtung 210 und eine Sensoreinrichtung 220, die bei der ersten Ausführungsform der Erfindung mit einem gegenseitigen Abstand an den Enden des überwachten Lichtwegs des Laserstrahls 1 angeordnet sind. Mit der Lichtquelleneinrichtung 210 wird ein Sicherheits-Lichtfeld 3 erzeugt, das sich entlang einer Längsachse (z-Richtung) erstreckt, die parallel zu dem Lichtweg des Laserstrahls 1 verläuft, und den Laserstrahl 1 allseitig einhüllt.

Die Lichtquelleneinrichtung 210 umfasst eine einzelne Lichtquelle 211, wie z. B. einen Laser oder insbesondere eine Laserdiode mit einer Emission im sichtbaren Spektralbereich (z. B. Laserdiode vom Typ DOE219-635-5-6 (-ADJ) (Hersteller Picotronic GmbH) mit einem Öffnungswinkel (Divergenz) von 34°, einer Emissionswellenlänge von 640 nm und einer Leistung von 5 mW). Die Lichtquelle 211 ist radial mit einem Abstand von der z-Richtung des Lichtweges des Laserstrahls 1 angeordnet. Der Abstand ist in Abhängigkeit von der Divergenz der Lichtquelle 211 gewählt und beträgt bei dem Öffnungswinkel von 34° z. B. 7 cm. Die Lichtquelle 211 hat eine strukturbedingt vorgegebene Divergenz. Das divergente Strahlenfeld der Lichtquelle 211 wird mit einer Strahlformereinrichtung 212 in das Sicherheits-Lichtfeld 3 überführt. Alternativ oder zusätzlich zur Strahlformung mit der Strahlformereinrichtung 212 mit Spiegeln wäre eine Fokussierung des Strahlenfelds der Lichtquelle 211 mit einer Linsenoptik möglich.

Die Strahlformereinrichtung 212 umfasst eine Spiegelanordnung mit einem Umlenkspiegel 213 und einem Kollimationsspiegel 214. Die Spiegelanordnung ist an einem vollständig justierbaren Spiegelhalter vorgesehen. Der Umlenkspiegel 213 ist z. B. ein Ringspiegel mit einer zentralen Öffnung, durch die der Laserstrahl 1 durchtritt. Mit dem Umlenkspiegel 213, der relativ zur z-Richtung z. B. um 45° geneigt ist, wird das Strahlenfeld der Lichtquelle 211 zur z-Richtung umgelenkt. Der Umlenkspiegel 213 ist z. B. ein ebener, polierter Al-Spiegel mit einer SiO₂-Deckschicht.

Der Kollimationsspiegel 214 hat eine Hohlkonus-Oberfläche. Er wirkt als Parallelrichter, der das Strahlenfeld der Lichtquelle 211 in die Strahltubus-Zylinderform des Sicherheits-Lichtfeldes 3 überführt. Die geometrische Form des Kollimationsspiegels 214 ist in Abhängigkeit vom Öffnungswinkel der Lichtquelle 211 gewählt. Der Kollimationsspiegel 214 kann insbesondere leicht konkav ausgeführt sein, um die Divergenz der Lichtquelle 211 auszugleichen oder eine vorbestimmte Divergenz in das Sicherheits-Lichtfeld 3 einzuführen. Alternativ oder zusätzlich kann zwischen der Lichtquelle 211 und dem Kollimationsspiegel 214 mindestens eine verstellbare Linse (nicht dargestellt) vorgesehen sein, um die Divergenz in das Sicherheits-Lichtfeld 3 einzustellen. Durch eine Einstellung der Divergenz könnte das Sicherheits-Lichtfeld 3 insbesondere in Abhängigkeit vom Abstand zwischen der Lichtquelleneinrichtung 210 und der Sensoreinrichtung 220 optimiert werden.

Vom Kollimationsspiegel 214 verläuft das Sicherheits-Lichtfeld 3, den Laserstrahl 1 einhüllend, zur Sensoreinrichtung 220. Der Durchmesser des Sicherheits-Lichtfeldes 3 beträgt z. B. 90 mm, während der Durchmesser des Laserstrahls z. B. 10 mm beträgt.

Die Sensoreinrichtung 220 hat eine Rohrform, deren Achse mit dem Lichtweg des Laserstrahls 1 und der Längsachse des Sicherheits-Lichtfeldes 3 zusammenfällt. Entsprechend hat die Sensoreinrichtung 220 einen axial verlaufenden, zentralen Hohlraum, durch den der Laserstrahl 1 durchtritt. Die Sensoreinrichtung 220 umfasst mindestens ein Sensorelement 221 mit einer lichtempfindlichen Sensorfläche, deren Form an die Form des Sicherheits-Lichtfeldes 3 angepasst ist und entsprechend z. B. einen ringförmigen Photowiderstand oder mehrere ringförmig angeordnete Photowiderstände umfasst. Wenn mehrere, z. B. 10 bis 20, Photowiderstände als Sensorelemente 221 vorgesehen sind, um die lichtempfindliche Sensorfläche zu bilden, sind die Photowiderstände vorzugsweise in Reihe geschaltet, so dass sie ein einziges Sensorsignal 4 (siehe Figur 3) abgeben, das bei Unterbrechung des Sicherheits-Lichtfeldes 3 veränderlich ist. Die Photowiderstände können alternativ jeweils ein Signal abgeben, aus dem das Sensorsignal der Sensoreinrichtung 220 ausgewählt oder erzeugt wird.

An der Bestrahlungsseite vor der lichtempfindlichen Sensorfläche ist ein Strahlsammler 222 vorgesehen, der einen Reflektor, z. B. aus Aluminium, umfasst. Der Strahlsammler 222 ist so geformt, dass das Sicherheits-Lichtfeld 3 möglichst vollständig zur lichtempfindlichen Sensorfläche des Sensorelements 221 gelenkt wird.

Des Weiteren ist die Sensoreinrichtung 220, um die lichtempfindliche Sensorfläche des Sensorelements 221 vor Streulicht zu schützen, mit einer hohlzylinderförmigen äußeren Streulichtblende 223 ausgestattet. Die Streulichtblende 223 bildet mit einer axialen Länge von z. B. 150 mm die Rohrform der Sensoreinrichtung 220, und sie ist z. B. aus Aluminium hergestellt. Vorzugsweise ist zusätzlich eine innere Streulichtblende 224 vorgesehen, die koaxial zur äußeren Streulichtblende 223 und zur z-Achse verläuft.

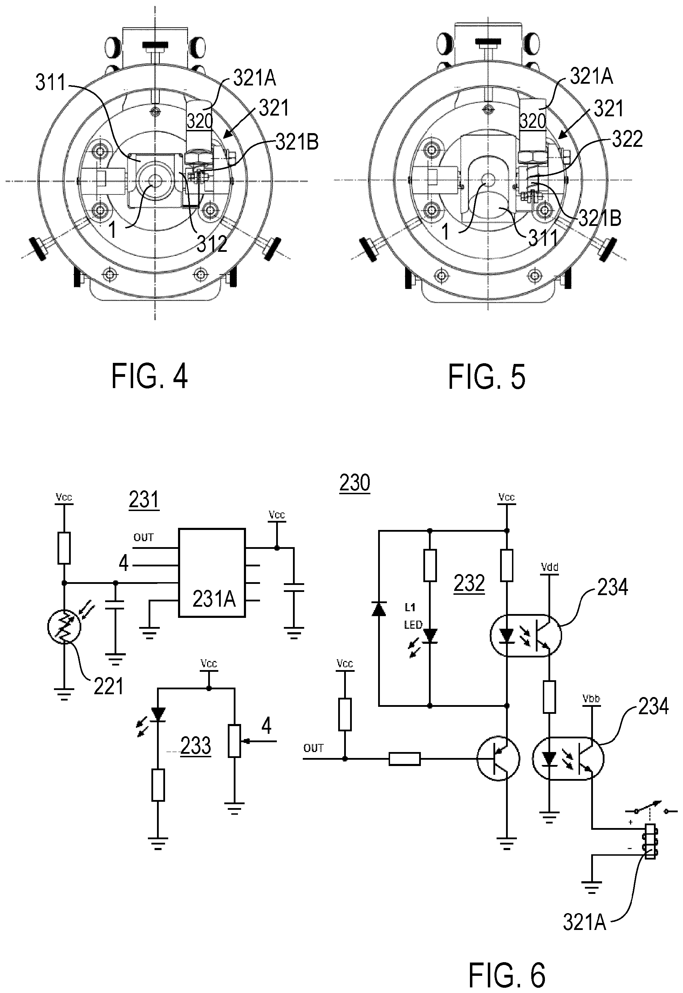

Die Unterbrechereinrichtung 300 ist mit der Lichtschrankeneinrichtung 200, insbesondere mechanisch mit der Lichtquelleneinrichtung 210 und elektrisch mit der Sensoreinrichtung 220 gekoppelt und zur Unterbrechung des Laserstrahls 1 in Abhängigkeit von einer Änderung des Sensorsignals 4 der Sensoreinrichtung 220 angeordnet. Die Unterbrechereinrichtung 300 umfasst einen Strahlblockierer 310 und eine Antriebseinrichtung 320 (in den Figuren 1 und 2 nicht gezeigt, siehe Figuren 3, 4 und 5), die über eine Steuereinrichtung 230 (in den Figuren 1 und 2 nicht gezeigt, siehe Figuren 3 und 6) mit der Sensoreinrichtung 220 gekoppelt ist.

Der Strahlblockierer 310, der mit weiteren Einzelheiten in den Figuren 4 und 5 (Draufsichten auf eine Ebene senkrecht zur z-Achse von der Seite der Laserquelleneinrichtung 410 her) gezeigt ist, umfasst ein PTFE-Schaumstoffteil 311 mit einer zentralen Bohrung. Das Schaumstoffteil 311 sitzt in einem hülsenförmigen Gehäuse 312, das mit einem drehbar gelagerten Hubmagneten 321 der Antriebseinrichtung 320 gekoppelt ist.

Der Hubmagnet 321 umfasst eine Zylinderspule 321A und einen ferromagnetischen Bolzen 321B. Durch Ansteuerung der Zylinderspule 321A ist der Hubmagnet 321 zwischen zwei Positionen beweglich (siehe Figuren 4 und 5). In einem mit elektrischem Strom aktivierten Zustand der Zylinderspule 321A ist der Hubmagnet 321 in der ersten Position so angeordnet, dass die zentrale Bohrung des Schaumstoffteils 311 mit der z-Achse ausgerichtet ist und der Laserstrahl 1 frei durch das Schaumstoffteil 311 durchtritt (Figur 4). Im stromlosen Zustand der Zylinderspule 321A ist der Hubmagnet 321 in der zweiten Position so angeordnet, dass die zentrale Bohrung des Schaumstoffteils 311 relativ zur z-Achse verdreht ist und der Laserstrahl 1 auf das Schaumstoffteil 311 trifft und blockiert ist (Figur 5).

Figur 1 zeigt den Normalzustand der Sicherheitsvorrichtung 100, in dem das mit der Lichtquelle 211 erzeugte Sicherheits-Lichtfeld 3 ungestört die Sensoreinrichtung 220 bestrahlt. Das Sensorsignal 4 der Sensoreinrichtung 220 bewirkt, dass die Zylinderspule 321A der Antriebseinrichtung 320 aktiviert ist und das Schaumstoffteil 311 in der ersten Position des Hubmagneten 321 den Laserstrahl 1 frei gibt. Wenn ein Gegenstand 2, wie z. B. die Hand eines Nutzers, in das Sicherheits-Lichtfeld 3 gerät (siehe Figur 2), wird das Sicherheits-Lichtfeld 3 teilweise abgedeckt. Dadurch ändert sich das Sensorsignal 4 der Sensoreinrichtung 220, wie mit weiteren Einzelheiten unten unter Bezug auf Figur 6 beschrieben wird. Mit der Steuereinrichtung 230 wird die Zylinderspule 321A in den stromlosen Zustand geschaltet, so dass der Hubmagnet 321 freigegeben wird und das Gehäuse 312 mit dem Schaumstoffteil 311 unter der Wirkung der Schwerkraft und/oder einer Rückholfeder 322 (siehe Figur 5) in die zweite Position gedreht wird und den Laserstrahl 1 blockiert.

Praktische Tests haben ergeben, dass eine Unterbrechung des Laserstrahls in einem Zeitintervall < 25 ms oder sogar < 10 ms möglich ist, wodurch der Laserstrahl 1, selbst wenn sich der Gegenstand 2 mit typischerweise im Betriebsraum der Laservorrichtung 400 auftretenden Geschwindigkeiten bewegt, blockiert ist, bevor der Gegenstand 2 den Laserstrahl 1 in der Mitte des Sicherheits-Lichtfeldes 3 erreicht.

Figur 6 zeigt Einzelheiten der Steuereinrichtung 230, die zur Ansteuerung der Unterbrechereinrichtung 300 in Abhängigkeit vom Steuersignal 4 der Sensoreinrichtung 220 eingerichtet ist (siehe Figur 3). Die Steuereinrichtung 230 umfasst einen Eingangskreis 231 zum Empfang und zur Auswertung des Sensorsignals 4 des Sensorelements 221 und einen Treiberkreis 232 zur Ansteuerung der Unterbrechereinrichtung 300. Des Weiteren ist optional ein Anzeigekreis 233 vorgesehen, der mit dem Sensorsignal 4 angesteuert wird und mit dem der Betriebszustand der Steuereinrichtung 230 mit einer LED signalisiert wird. Die Steuereinrichtung 230 kann durch eine kommerziell verfügbare, integrierte und programmierbare Schaltung gebildet werden.

Der Eingangskreis 231 enthält einen Komparatorkreis 231A, z. B. vom Typ Lm393, der an seinem Eingang als Eingangsgröße das Sensorsignal 4 des Sensorelements 221 empfängt und durch Vergleich mit gespeicherten Referenzgrößen ein Ausgangssignal OUT erzeugt, das von dem Treiberkreis 232 mit der Unterbrechereinrichtung 300 verknüpft wird. Wenn das Sicherheits-Lichtfeld 3 zumindest teilweise abgedeckt wird, ändert sich das Sensorsignal 4, so dass der Vergleich mit der Referenzgröße ein verändertes Ergebnis liefert. Das Ausgangssignal OUT des Komparatorkreises 231A hat entsprechend zwei Zustände (Pegel), die den ungestörten Zustand oder den abgedeckten Zustand des Sicherheits-Lichtfeldes 3 repräsentieren.

Vom Treiberkreis 232 wird das Ausgangssignal OUT mit dem Pegel des ungestörten Zustands in die Erzeugung einer Treiberspannung, z. B. 24 V, zur Aktivierung der Zylinderspule 321A umgesetzt. Im Ergebnis ist der Laserstrahl 1 frei gegeben (Figuren 1, 4). Hat das Ausgangssignal OUT des Eingangskreises 231 den Pegel des abgedeckten Zustands, wird die Treiberspannung auf Null gesetzt, so dass die Zylinderspule 321A in den stromlosen Zustand gelangt und der Laserstrahl 1 unterbrochen wird (Figuren 2, 5). Hierzu enthält der Treiberkreis 232 mehrere Verstärkerstufen, die vorzugsweise durch optische Relais 234 realisiert werden, die eine galvanische Trennung zwischen der Sensoreinrichtung 220 und der Unterbrechereinrichtung 300 einführen.

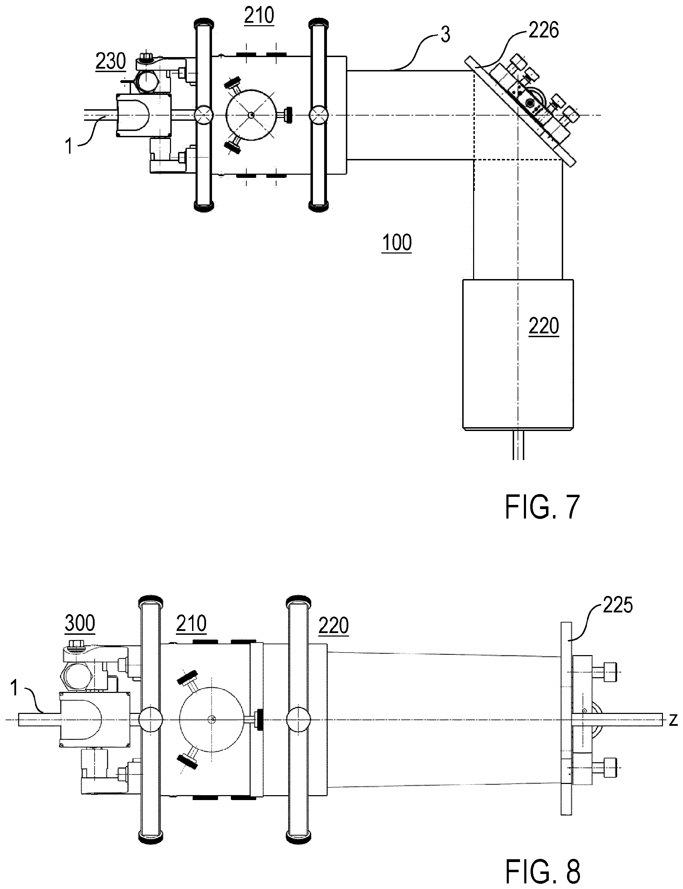

Figur 7 zeigt eine zweite Ausführungsform der Erfindung, bei der die Sicherheitsvorrichtung 100 mit der Lichtquelleneinrichtung 210, der Sensoreinrichtung 220 und der Unterbrechereinrichtung 300 im Wesentlichen wie in den Figuren 1 und 2 aufgebaut ist. Abweichend von der ersten Ausführungsform ist der Lichtweg des Laserstrahls 1 durch einen ebenen Zusatz-Umlenkspiegel 226, z. B. um 90°, abgewinkelt. Der Zusatz-Umlenkspiegel 226 ist zugleich für eine schematisch dargestellte Umlenkung des Sicherheits-Lichtfeldes 3 angeordnet, so dass das Sicherheits-Lichtfeld 3 den Laserstrahl 1 entlang der gesamten überwachten Länge seines Lichtwegs allseits einhüllt.

Figur 8 zeigt eine dritte Ausführungsform der Erfindung, bei der die Lichtquelleneinrichtung 210 und die Sensoreinrichtung 220 zueinander benachbart als Einheit angeordnet sind. Um das Sicherheits-Lichtfeld 3 entlang des Lichtwegs des Laserstrahls 1 zu bilden, ist ein Ringspiegel 225 vorgesehen, der das von der Lichtquelleneinrichtung 210 erzeugte Sicherheits-Lichtfeld 3 reflektiert, so dass es von der Sensoreinrichtung 220 empfangen werden kann. Bei dieser Ausführungsform hat das Sicherheits-Lichtfeld 3 eine divergente Form mit einem sich erweiternden Durchmesser, um das Sicherheits-Lichtfeld 3 zunächst durch die zentrale Öffnung der Sensoreinrichtung 220 zum Ringspiegel 225 und von diesem auf die lichtempfindliche Fläche außerhalb der zentralen Öffnung der Sensoreinrichtung 220 zu richten.

Abweichend von Figur 8 können der Ringspiegel 225 am Unterbrecher 300 und die Kombination aus der Lichtquelleneinrichtung 210 und der Sensoreinrichtung 220 mit Abstand vom Unterbrecher 300 angeordnet sein.

Die Betätigung der Unterbrechereinrichtung 300 erfolgt bei den Ausführungsformen der Figuren 7 und 8, wie oben unter Bezug auf die Figuren 1 bis 6 beschrieben ist.

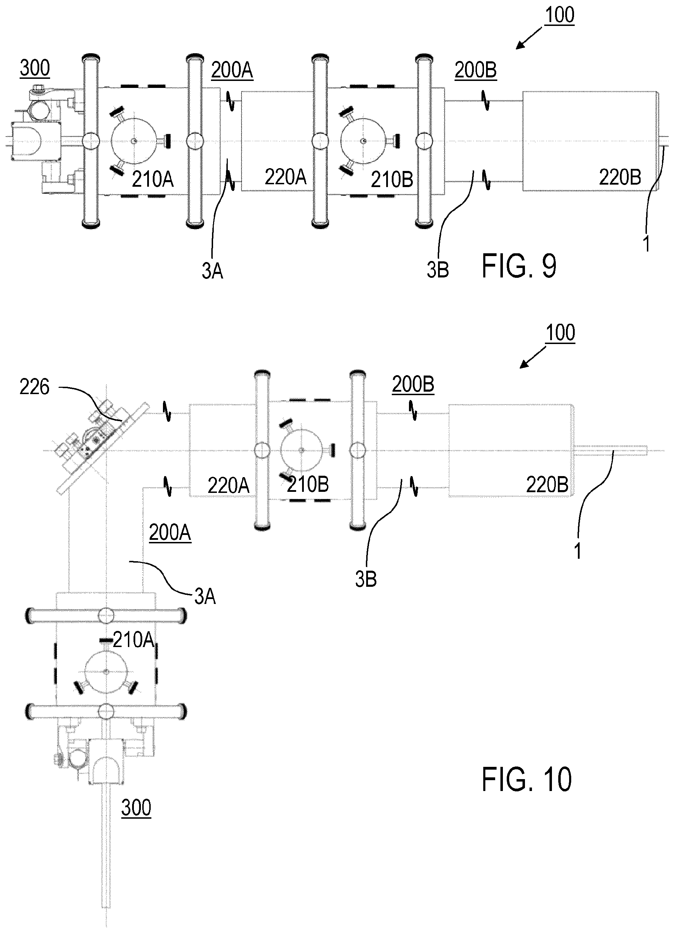

Wie in den Figuren 9 und 10 illustriert ist, kann die Sicherheitsvorrichtung 100, insbesondere bei einem besonders langen und/oder bei einem über mindestens einen Zusatz-Umlenkspiegel 226 abgewinkelten Lichtweg des Laserstrahls 1, zwei oder mehr aufeinanderfolgend angeordnete Lichtschrankeneinrichtungen 200A, 200B jeweils mit einer Lichtquelleneinrichtung 210A, 210B und mit einer Sensoreinrichtung 220A, 220B zur Erzeugung und Detektion des Sicherheits-Lichtfeldes in Teilstücken 3A, 3B entlang des Lichtwegs des Laserstrahls 1 aufweisen. Aus Übersichtlichkeitsgründen sind nur zwei Lichtschrankeneinrichtungen 200A, 200B und die jeweiligen in Teilstücke 3A, 3B nicht vollständig, sondern die Lichtquellen- und Sensoreinrichtungen mit einem geringen gegenseitigen Abstand gezeigt. In der Praxis können mehr Lichtschrankeneinrichtungen vorgesehen sein, wobei die Lichtquellen- und Sensoreinrichtungen in den jeweiligen in Teilstücken 3A, 3B des Lichtwegs des Laserstrahls 1 je nach den räumlichen Bedingungen größere Abstände haben.

Jede der Lichtschrankeneinrichtungen 200A, 200B ist so aufgebaut, wie oben beschrieben ist. Jede der Sensoreinrichtungen 220A, 220B ist mit der Unterbrechereinrichtung 300 gekoppelt, die, ebenfalls wie oben beschrieben ist, den Laserstrahl 1 bei Verletzung des Sicherheits-Lichtfeldes in Abhängigkeit von einer Änderung des Sensorsignals 4 von mindestens einer der Sensoreinrichtungen 220A, 220B unterbricht. Die Lichtquelleneinrichtung 210B der Lichtschrankeneinrichtung 200B bildet vorzugsweise mit der Sensoreinrichtung 220A der Lichtschrankeneinrichtung 200A eine Einheit.

Die Sicherheitsvorrichtung 100 kann gemäß weiteren abgewandelten Ausführungsformen der Erfindung mit mindestens einem der folgenden Merkmale realisiert werden.

Die Lichtquelle 211 kann einen veränderlichen oder einen festen Fokus aufweisen. Mit dem veränderlichen Fokus ist der Durchmesser des Sicherheits-Lichtfeldes 3 variierbar. Der feste Fokus kann Vorteile für eine kompakte Bauform der Lichtquelleneinrichtung 210 haben.

Der Durchmesser des Sicherheits-Lichtfeldes 3 kann alternativ oder zusätzlich durch abbildende, reflektive Optiken eingestellt, insbesondere vergrößert werden.

Die Abstrahlrichtung der Lichtquelle 211 kann abweichend von den Illustrationen parallel zur z-Achse, d. h. parallel zum Laserstrahl 1, vorgesehen sein, wobei in diesem Fall die Strahlformereinrichtung 212 zur Bildung des Sicherheits-Lichtfeldes 3 angepasst wird. Anstelle der einzelnen Lichtquelle 211 können mehrere Lichtquellen, z. B. 10 oder mehr Laser, auf einer Kreisringfläche angeordnet werden und direkt, d. h. ohne eine Strahlformereinrichtung, das Sicherheits-Lichtfeld 3 erzeugen.

Zur Signalisierung einer Unterbrechung des Laserstrahls 1 kann die Erzeugung eines Audiosignals vorgesehen sein. Das Audiosignal kann z. B. mit der Steuereinrichtung 230 erzeugt werden und der Warnung bei aktivem Laser und bei Verletzung der Schutzlaserzone dienen.

Die in der vorstehenden Beschreibung, den Zeichnungen und den Ansprüchen offenbarten Merkmale der Erfindung können sowohl einzeln als auch in Kombination oder Unterkombination für die Verwirklichung der Erfindung in ihren verschiedenen Ausgestaltungen von Bedeutung sein.

### Bezugszeichenliste

- 1: Laserstrahl
- 2: Gegenstand
- 3: Sicherheits-Lichtfeld
- 3A: Teilstück des Sicherheits-Lichtfeldes
- 3B: Teilstück des Sicherheits-Lichtfeldes
- 4: Sensorsignal

- 100: Sicherheitsvorrichtung

- 200: Lichtschrankeneinrichtung
- 200A: Lichtschrankeneinrichtung
- 200B: Lichtschrankeneinrichtung
- 210: Lichtquelleneinrichtung
- 210A: Lichtquelleneinrichtung
- 210B: Lichtquelleneinrichtung
- 211: Lichtquelle
- 212: Strahlformereinrichtung
- 213: Umlenkspiegel
- 214: Kollimationsspiegel
- 220: Sensoreinrichtung
- 220A: Sensoreinrichtung
- 220B: Sensoreinrichtung
- 221: Sensorelement
- 222: Strahlsammler
- 223: Äußere Streulichtblende
- 224: Innere Streulichtblende
- 225: Ringspiegel
- 226: Zusatz-Umlenkspiegel
- 230: Steuereinrichtung
- 231: Eingangskreis
- 231A: Komparatorkreis
- 232: Treiberkreis
- 233: Anzeigekreis
- 234: Optisches Relais

- 300: Unterbrechereinrichtung.
- 310: Strahlblockierer
- 311: Schaumstoffteil
- 312: Gehäuse
- 320: Antriebseinrichtung
- 321: Hubmagnet
- 321A: Zylinderspule
- 321B: Ferromagnetischer Bolzen
- 322: Rückholfeder

- 400: Laservorrichtung
- 410: Laserquelleneinrichtung

- 500: Fusionsreaktor

## Patentansprüche

1. Sicherheitsvorrichtung (100), die zur Überwachung eines Lichtwegs eines Laserstrahls (1) und zur Unterbrechung des Laserstrahls (1) in Reaktion auf eine Annäherung eines Gegenstands (2) an den Laserstrahl (1) eingerichtet ist, umfassend
- mindestens eine Lichtschrankeneinrichtung (200, 200A, 200B) mit einer Lichtquelleneinrichtung (210, 210A, 210B), die zur Erzeugung eines Sicherheits-Lichtfeldes (3) angeordnet ist, das sich entlang mindestens einer Längsachse (z) erstreckt, die parallel zu dem Lichtweg des Laserstrahls (1) verläuft, und mit einer Sensoreinrichtung (220, 220A, 220B), die mindestens ein Sensorelement (221) aufweist und zur Detektion des Sicherheits-Lichtfeldes (3) und Erzeugung eines Sensorsignals (4) angeordnet ist, das durch eine zumindest teilweise Abdeckung des Sicherheits-Lichtfeldes (3, 3A, 3B) durch den Gegenstand (2) veränderlich ist, und
- eine Unterbrechereinrichtung (300), die mit der mindestens einen Lichtschrankeneinrichtung (200, 200A, 200B) gekoppelt und zur Unterbrechung des Laserstrahls (1) in Abhängigkeit von einer Änderung des Sensorsignals (4) der mindestens einen Lichtschrankeneinrichtung (200, 200A, 200B) angeordnet ist,
**dadurch gekennzeichnet, dass**
- die Unterbrechereinrichtung (300) einen Strahlblockierer (310) und eine Antriebseinrichtung (320) umfasst, die mit der Sensoreinrichtung (220, 220A, 220B) gekoppelt ist, wobei
- der Strahlblockierer (310) mit der Antriebseinrichtung (320) in Abhängigkeit vom Sensorsignal (4) der Sensoreinrichtung (220, 220A, 220B) in den oder aus dem Lichtweg des Laserstrahls (1) beweglich ist.

2. Sicherheitsvorrichtung gemäß Anspruch 1, bei der
- die Lichtquelleneinrichtung (210, 210A, 210B) zur Erzeugung des Sicherheits-Lichtfeldes (3, 3A, 3B) in Gestalt eines Strahltubus eingerichtet ist, der sich entlang der mindestens einen Längsachse (z) erstreckt und den Lichtweg des Laserstrahls (1) radial mindestens halbseitig, vorzugsweise allseitig, umgibt, wobei vorzugsweise der Strahltubus die Form eines geraden Kreiszylinders oder eine Konusform hat; und/oder
- das Sicherheits-Lichtfeld eine Querschnittsform aufweist, die sich in Bezug auf den Lichtweg des Laserstrahls (1) radial über mindestens einen Winkelabschnitt kleiner als 180° erstreckt.

3. Sicherheitsvorrichtung gemäß einem der vorhergehenden Ansprüche, bei der
a) die Lichtquelleneinrichtung (210, 210A, 210B) eine einzelne Lichtquelle (211) mit einem divergenten Strahlenfeld und eine Strahlformereinrichtung (212) aufweist, die zur Formung des Sicherheits-Lichtfeldes (3, 3A, 3B) aus dem divergenten Strahlenfeld eingerichtet ist; oder
b) die Lichtquelleneinrichtung (210, 210A, 210B) eine Vielzahl von Lichtquellen umfasst, die zur Formung des Sicherheits-Lichtfeldes (3, 3A, 3B) angeordnet sind.

4. Sicherheitsvorrichtung gemäß Anspruch 3a), bei der
- die Strahlformereinrichtung (212) eine Spiegelanordnung mit einem Umlenkspiegel (213) und einem Kollimationsspiegel (214) aufweist, und
- die Lichtquelle (211) radial von der mindestens einen Längsachse (z) beabstandet angeordnet ist, wobei
- der Umlenkspiegel (213) zur Umlenkung des divergenten Strahlenfeldes der Lichtquelle (211) hin zu der mindestens einen Längsachse (z) und der Kollimationsspiegel (214) zur Formung des Sicherheits-Lichtfeldes (3, 3A, 3B) parallel oder divergent relativ zu der mindestens einen Längsachse (z) angeordnet ist.

5. Sicherheitsvorrichtung gemäß einem der vorhergehenden Ansprüche, bei der
- die Sensoreinrichtung (220, 220A, 220B) eine lichtempfindliche Sensorfläche aufweist, die an eine Querschnittsform des Sicherheits-Lichtfeldes (3, 3A, 3B) angepasst ist, wobei vorzugsweise die lichtempfindliche Sensorfläche der Sensoreinrichtung (220, 220A, 220B) die Form eines halben Kreisrings, vorzugsweise eines kompletten Kreisrings, aufweist.

6. Sicherheitsvorrichtung gemäß einem der vorhergehenden Ansprüche, bei der das mindestens eine Sensorelement (221) mindestens eines der Merkmals aufweist
- das mindestens eine Sensorelement (221) umfasst einen Photowiderstand oder eine Photodiode, und
- das mindestens eine Sensorelement (221) ist mit einem Strahlsammler (222) ausgestattet, der zur Sammlung des Sicherheits-Lichtfeldes (3, 3A, 3B) am mindestens einen Sensorelement (221) eingerichtet ist.

7. Sicherheitsvorrichtung gemäß einem der vorhergehenden Ansprüche, bei der
- die Sensoreinrichtung (220, 220A, 220B) eine Vielzahl von in Reihe geschalteten Sensorelementen (221) aufweist; und/oder
- die Sensoreinrichtung (220, 220A, 220B) eine Streulichtblende (223, 224) aufweist, die sich an einem Endabschnitt des Sicherheits-Lichtfeldes (3, 3A, 3B) an der Sensoreinrichtung (220, 220A, 220B) entlang der mindestens einen Längsachse (z) erstreckt und zur Abschirmung des Sicherheits-Lichtfeldes (3, 3A, 3B) gegenüber Umgebungslicht eingerichtet ist.

8. Sicherheitsvorrichtung gemäß einem der vorhergehenden Ansprüche, bei der der Strahlblockierer (310) mindestens eines der Merkmale aufweist
- der Strahlblockierer (310) ist aus einem Kunst-Schaumstoff hergestellt,
- der Strahlblockierer (310) ist aus einem klaren, nicht-absorbierenden lichtdurchlässigen Kunststoff hergestellt,
- der Strahlblockierer (310) ist aus PTFE hergestellt,
- der Strahlblockierer (310) hat die Gestalt eines Hohlzylinders, der um eine Querachse senkrecht zur mindestens einen Längsachse (z) so verschwenkbar ist, dass der Strahlblockierer (310) in einem unverschwenkten Zustand den Lichtweg des Laserstrahls (1) freigibt und in einem verschwenkten Zustand den Lichtweg des Laserstrahls (1) blockiert, und
- der Strahlblockierer (310) umfasst einen in einer Laserquelleneinrichtung (410) zur Erzeugung des Laserstrahls (1) enthaltenen Shutter.

9. Sicherheitsvorrichtung gemäß einem der vorhergehenden Ansprüche, bei der
- die mindestens eine Lichtschrankeneinrichtung (200, 200A, 200B) und die Unterbrechereinrichtung (300) sich axial erstreckende Durchgangsöffnungen aufweisen, die den Lichtweg des Laserstrahls (1) frei lassen; und/oder
- die Lichtquelleneinrichtung (210, 210A, 210B), ein Ringspiegel (225) und die Sensoreinrichtung (220, 220A, 220B) derart angeordnet sind, dass sich das Sicherheits-Lichtfeld (3, 3A, 3B) von der Lichtquelleneinrichtung (210, 210A, 210B) über den Kreisring-Spiegel (225) zu der Sensoreinrichtung (220, 220A, 220B) erstreckt.

10. Sicherheitsvorrichtung gemäß einem der vorhergehenden Ansprüche, bei der
- die Lichtquelleneinrichtung (210, 210A, 210B) für einen modulierten Betrieb derart konfiguriert ist, dass dem Sicherheits-Lichtfeld (3, 3A, 3B) eine Modulation aufgeprägt wird, und
- die Sensoreinrichtung (220, 220A, 220B) mit einer Auswertungseinrichtung gekoppelt ist, die zur Erfassung der Modulation des Sicherheits-Lichtfeldes (3, 3A, 3B) und zur Erzeugung des Sensorsignals (4) nur dann eingerichtet ist, wenn die Modulation des Sicherheits-Lichtfeldes (3, 3A, 3B) erfasst wird.

11. Sicherheitsvorrichtung gemäß einem der vorhergehenden Ansprüche, bei der
- eine einzige Lichtschrankeneinrichtung (200) vorgesehen ist, wobei die Lichtquelleneinrichtung (210, 210A, 210B) und die Sensoreinrichtung (220) an den Enden eines zu überwachenden Lichtwegs des Laserstrahls (1) angeordnet sind; oder
- mindestens zwei Lichtschrankeneinrichtungen (200, 200A, 200B) vorgesehen sind, die aufeinander folgend am zu überwachenden Lichtweg des Laserstrahls (1) angeordnet sind, wobei die Lichtquelleneinrichtung (210, 210A, 210B) und die Sensoreinrichtung (220, 220A, 220B) von jeder der mindestens zwei Lichtschrankeneinrichtungen (200, 200A, 200B) an den Enden jeweils eines Teilstücks (3A, 3B) des Sicherheits-Lichtfeldes des zu überwachenden Lichtwegs des Laserstrahls (1) angeordnet sind, wobei die Unterbrechereinrichtung (300) mit jeder Lichtschrankeneinrichtung (200, 200A, 200B) gekoppelt und zur Unterbrechung des Laserstrahls (1) in Abhängigkeit von einer Änderung des Sensorsignals (4) von mindestens einer der Lichtschrankeneinrichtungen (200, 200A, 200B) angeordnet ist.

12. Laservorrichtung (400), umfassend
- eine Laserquelleneinrichtung (410), die zur Erzeugung eines Laserstrahls (1) entlang eines Lichtwegs eingerichtet ist, und
- die Sicherheitsvorrichtung (100) gemäß einem der vorhergehenden Ansprüche, die zur Überwachung des Lichtwegs des Laserstrahls (1) und zur Unterbrechung des Laserstrahls (1) in Reaktion auf eine Annäherung eines Gegenstands (2) an den Laserstrahl (1) angeordnet ist.

13. Laservorrichtung gemäß Anspruch 12, bei der
- die Lichtquelleneinrichtung (210, 210A, 210B) der mindestens einen Lichtschrankeneinrichtung (200, 200A, 200B) und die Unterbrechereinrichtung (300) Teil der Laserquelleneinrichtung (410) und/oder mit dieser fest gekoppelt sind.

14. Anwendung der Sicherheitsvorrichtung (100) gemäß einem der Ansprüche 1 bis 11 zur Sicherung einer Betriebsfläche zwischen mindestens einer Laserquelleneinrichtung (410) und einem Fusionsreaktor (500).

15. Verfahren zur Überwachung eines Lichtwegs eines Laserstrahls (1) und zur Unterbrechung des Laserstrahls (1) in Reaktion auf eine Annäherung eines Gegenstands (2) an den Laserstrahl (1), wobei die Sicherheitsvorrichtung gemäß einem der Ansprüche 1 bis 11 verwendet wird, mit den Schritten:
- Erzeugung des mindestens einen Sicherheits-Lichtfeldes (3, 3A, 3B) und Erfassung des mindestens einen Sensorsignals der mindestens einen Lichtschrankeneinrichtung (200, 200A, 200B), das einem ungestörten Sicherheits-Lichtfeld (3, 3A, 3B) entspricht, und
- Betätigung der Unterbrechereinrichtung (300) bei einer Änderung des mindestens einen Sensorsignals (4) in Folge einer zumindest teilweisen Abdeckung des mindestens einen Sicherheits-Lichtfeldes (3, 3A, 3B) durch den Gegenstand, so dass der Laserstrahl (1) unterbrochen wird.

## Claims

1. Safety apparatus (100) configured for monitoring a light path of a laser beam (1) and for interrupting the laser beam (1) in response to an approach of an object (2) to the laser beam (1), comprising
- at least one light barrier device (200, 200A, 200B) with a light source device (210, 210A, 210B) which is arranged for generating a safety light field (3) which extends along at least one longitudinal axis (z) which runs parallel to the light path of the laser beam (1) and with a sensor device (220, 220A, 220B) which comprises at least one sensor element (221) and is arranged for detecting the safety light field (3) and generating a sensor signal (4) which is variable by an at least partial covering of the safety light field (3, 3A, 3B) by the object (2), and
- an interrupter device (300) which is coupled to the at least one light barrier device (200, 200A, 200B) and is arranged for interrupting the laser beam (1) as a function of a change in the sensor signal (4) of the at least one light barrier device (200, 200A, 200B),
**characterized in that**
- the interrupter device (300) comprises a beam blocker (310) and a drive device (320) coupled to the sensor device (220, 220A, 220B), wherein
- the beam blocker (310) is movable with the drive device (320) into or out of the light path of the laser beam (1) in dependency on the sensor signal (4) of the sensor device (220, 220A, 220B).

2. Safety apparatus according to claim 1, wherein
- the light source device (210, 210A, 210B) is configured for generating the safety light field (3, 3A, 3B) in the form of a beam tube which extends along the at least one longitudinal axis (z) and radially surrounds the light path of the laser beam (1) at least on half-side, preferably on all sides, wherein preferably the beam tube has a shape of a straight circular cylinder or a cone shape; and/or
- the safety light field has a cross-sectional shape which, in relation to the light path of the laser beam (1), extends radially over at least one angular section of less than 180°.

3. Safety apparatus according to one of the preceding claims, wherein
a) the light source device (210, 210A, 210B) comprises one single light source (211) with a divergent beam field and a beam shaping device (212) arranged to shape the safety light field (3, 3A, 3B) from the divergent beam field; or
b) the light source device (210, 210A, 210B) comprises a plurality of light sources arranged for shaping the safety light field (3, 3A, 3B).

4. Safety apparatus according to claim 3a), wherein
- the beam shaping device (212) comprises a mirror arrangement with a deflection mirror (213) and a collimating mirror (214), and
- the light source (211) is arranged radially spaced from the at least one longitudinal axis (z), wherein
- the deflection mirror (213) is arranged for deflecting the divergent beam field of the light source (211) towards the at least one longitudinal axis (z) and the collimation mirror (214) is arranged for shaping the safety light field (3, 3A, 3B) parallel or divergent relative to the at least one longitudinal axis (z).

5. Safety apparatus according to one of the preceding claims, wherein
- the sensor device (220, 220A, 220B) comprises a light-sensitive sensor area adapted to a cross-sectional shape of the safety light field (3, 3A, 3B), wherein preferably the light-sensitive sensor area of the sensor device (220, 220A, 220B) has a shape of a half circular ring, preferably a complete circular ring.

6. Safety apparatus according to one of the preceding claims, wherein the at least one sensor element (221) comprises at least one of the features
- the at least one sensor element (221) comprises a photoresistor or a photodiode, and
- the at least one sensor element (221) is provided with a beam collector (222) which is configured for collecting the safety light field (3, 3A, 3B) at the at least one sensor element (221).

7. Safety apparatus according to one of the preceding claims, wherein
- the sensor device (220, 220A, 220B) comprises a plurality of sensor elements (221) connected in series; and/or
- the sensor device (220, 220A, 220B) comprises a stray light shield (223, 224) which extends at an end portion of the safety light field (3, 3A, 3B) on the sensor device (220, 220A, 220B) along the at least one longitudinal axis (z) and is configured for shielding the safety light field (3, 3A, 3B) from ambient light.

8. Safety apparatus according to one of the preceding claims, wherein the beam blocker (310) has at least one of the features
- the beam blocker (310) is made of a synthetic foam material,
- the beam blocker (310) is made of a clear, non-absorbent translucent plastic,
- the beam blocker (310) is made of PTFE,
- the beam blocker (310) has the shape of a hollow cylinder which is pivotable about a transverse axis perpendicular to the at least one longitudinal axis (z) such that the beam blocker (310) clears the light path of the laser beam (1) in a non-pivoted state and blocks the light path of the laser beam (1) in a pivoted state, and
- the beam blocker (310) comprises a shutter contained in a laser source device (410) for generating the laser beam (1).

9. Safety apparatus according to one of the preceding claims, wherein
- the at least one light barrier device (200, 200A, 200B) and the interrupter device (300) comprise axially extending through passage openings which leave the light path of the laser beam (1) free; and/or
- the light source device (210, 210A, 210B), a ring mirror (225) and the sensor device (220, 220A, 220B) are arranged such that the safety light field (3, 3A, 3B) extends from the light source device (210, 210A, 210B) via the ring mirror (225) to the sensor device (220, 220A, 220B).

10. Safety apparatus according to one of the preceding claims, wherein
- the light source device (210, 210A, 210B) is configured for a modulated operation such that a modulation is applied on the safety light field (3, 3A, 3B), and
- the sensor device (220, 220A, 220B) is coupled to an evaluation device which configured for detecting the modulation of the safety light field (3, 3A, 3B) and for generating the sensor signal (4) only when the modulation of the safety light field (3, 3A, 3B) is detected.

11. Safety apparatus according to one of the preceding claims, wherein
- one single light barrier device (200) is provided, wherein the light source device (210, 210A, 210B) and the sensor device (220) are arranged at the ends of a light path of the laser beam (1) to be monitored; or
- at least two light barrier devices (200, 200A, 200B) are provided, which are arranged consecutively to one another on the light path of the laser beam (1) to be monitored, wherein the light source device (210, 210A, 210B) and the sensor device (220, 220A, 220B) of each of the at least two light barrier devices (200, 200A, 200B) are arranged at the ends of a respective section (3A, 3B) of the safety light field of the light path of the laser beam (1) to be monitored, wherein the interrupter device (300) is coupled to each light barrier device (200, 200A, 200B) and is arranged for interrupting the laser beam (1) dependent on a change in the sensor signal (4) from at least one of the light barrier devices (200, 200A, 200B).

12. Laser apparatus (400), comprising
- a laser source device (410) configured for generating a laser beam (1) along a light path, and
- the safety apparatus (100) according to one of the preceding claims, which is arranged for monitoring the light path of the laser beam (1) and for interrupting the laser beam (1) in response to an approach of an object (2) to the laser beam (1).

13. Laser apparatus according to claim 12, wherein
- the light source device (210, 210A, 210B) of the at least one light barrier device (200, 200A, 200B) and the interrupter device (300) are part of the laser source device (410) and/or are fixedly coupled thereto.

14. Using the safety apparatus (100) according to one of claims 1 to 11 for securing an operating area between at least one laser source device (410) and a fusion reactor (500).

15. A method for monitoring a light path of a laser beam (1) and for interrupting the laser beam (1) in response to an approach of an object (2) to the laser beam (1), wherein the safety apparatus according to one of claims 1 to 11 is used, comprising the steps of:
- generating the at least one safety light field (3, 3A, 3B) and detecting the at least one sensor signal of the at least one light barrier device (200, 200A, 200B), which corresponds to an undisturbed safety light field (3, 3A, 3B), and
- actuating of the interrupter device (300) in the event of a change in the at least one sensor signal (4) as a result of at least partial coverage of the at least one safety light field (3, 3A, 3B) by the object, so that the laser beam (1) is interrupted.

## Revendications

1. Dispositif de sécurité (100) qui est mis au point pour surveiller un trajet lumineux d'un faisceau laser (1) et pour interrompre le faisceau laser (1) en réponse à un rapprochement d'un objet (2) du faisceau laser (1), comprenant
- au moins un système de barrière lumineuse (200, 200A, 200B) avec un système de source lumineuse (210, 210A, 210B), qui est disposé pour générer un champ lumineux de sécurité (3) qui s'étend le long d'au moins un axe longitudinal (z) qui s'étend parallèlement au trajet lumineux du faisceau laser (1), et avec un système de capteur (220, 220A, 220B) qui présente au moins un élément capteur (221) et qui est disposé pour détecter le champ lumineux de sécurité (3) et pour générer un signal capteur (4), qui peut être modifié par une couverture au moins partielle du champ lumineux de sécurité (3, 3A, 3B) par l'objet (2), et
- un système d'interruption (300), qui est couplé à l'au moins un système de barrière lumineuse (200, 200A, 200B) et est disposé pour interrompre le faisceau laser (1) en fonction d'une modification du signal de capteur (4) de l'au moins un système de barrière lumineuse (200, 200A, 200B),
**caractérisé en ce que**
- le système d'interruption (300) comprend un bloqueur de jet (310) et un système d'entraînement (320) qui est couplé au système de capteur (220, 220A, 220B), dans lequel
- le bloqueur de faisceau (310) est mobile avec le système d'entraînement (320) en fonction du signal de capteur (4) du système de capteur (220, 220A, 220B) dans ou hors du chemin lumineux du faisceau laser (1).

2. Dispositif de sécurité selon la revendication 1, où
- le système de source de lumière (210, 210A, 210B) est mis au point pour générer le champ lumineux de sécurité (3, 3A), 3B) sous la forme d'un tube de faisceau qui s'étend le long de l'au moins un axe longitudinal (z) et entoure radialement le trajet lumineux du faisceau laser (1) au moins d'un demi-côté, de préférence de tous les côtés, dans lequel, de préférence, le tube de faisceau a la forme d'un cylindre circulaire droit ou d'un cône ; et/ou
- le champ lumineux de sécurité présente une forme de section transversale qui s'étend radialement par rapport au trajet lumineux du faisceau laser (1) sur au moins une section angulaire inférieure à 180°.

3. Dispositif de sécurité selon l'une quelconque des revendications précédentes, où
a) le système de source lumineuse (210, 210A, 210B) présente une source lumineuse (211) unique avec un champ de rayonnement divergent et un système de formation de faisceau (212), qui est mis au point pour former le champ lumineux de sécurité (3, 3A, 3B) à partir du champ de rayonnement divergent ; ou
b) le système de source lumineuse (210, 210A, 210B) comprend une pluralité de sources lumineuses qui sont disposées pour former le champ lumineux de sécurité (3, 3A, 3B).

4. Dispositif de sécurité selon la revendication 3a), où
- le système de formation de faisceau (212) présente un ensemble de miroirs avec un miroir de déviation (213) et un miroir de collimation (214), et
- la source lumineuse (211) est disposée de manière radialement espacée de l'au moins un axe longitudinal (z), dans lequel
- le miroir de déviation (213) pour dévier le champ de rayonnement divergent de la source lumineuse (211) vers l'au moins un axe longitudinal (z) et le miroir de collimation (214) pour former le champ lumineux de sécurité (3, 3A, 3B) sont disposés parallèlement ou de manière divergente par rapport à l'au moins un axe longitudinal (z).

5. Dispositif de sécurité selon l'une quelconque des revendications précédentes, où
- le système de capteur (220, 220A, 220B) présente une surface de capteur sensible à la lumière qui s'adapte à une forme de section transversale du champ lumineux de sécurité (3, 3A, 3B), dans lequel de préférence la surface de capteur sensible à la lumière du système de capteur (220, 220A, 220B) présente la forme d'un demi-anneau circulaire, de préférence d'un anneau circulaire complet.

6. Dispositif de sécurité selon l'une quelconque des revendications précédentes, où l'au moins un élément capteur (221) présente au moins une des caractéristiques
- l'au moins un élément capteur (221) comprend une photorésistance ou une photodiode, et
- l'au moins un élément capteur (221) est équipé d'un collecteur de faisceau (222) qui est mis au point pour collecter le champ lumineux de sécurité (3, 3A, 3B) sur l'au moins un élément capteur (221).

7. Dispositif de sécurité selon l'une quelconque des revendications précédentes, où
- le système de détection (220, 220A, 220B) présente une pluralité d'éléments de détection (221), connectés en série ; et/ou
- le système de capteur (220, 220A, 220B) présente un diaphragme à lumière diffuse (223, 224), qui s'étend sur une section d'extrémité du champ lumineux de sécurité (3, 3A, 3B) sur le système de capteur (220, 220A, 220B) le long de l'au moins un axe longitudinal (z) et est mis au point pour protéger le champ lumineux de sécurité (3, 3A, 3B) par rapport à la lumière ambiante.

8. Dispositif de sécurité selon l'une quelconque des revendications précédentes, où le bloqueur de faisceau (310) présente au moins une des caractéristiques
- le bloqueur de faisceau (310) est fabriqué à partir d'une mousse synthétique,
- le bloqueur de faisceau (310) est fabriqué à partir d'un plastique transparent, non absorbant et translucide,
- le bloqueur de faisceau (310) est fabriqué à partir de PTFE,
- le bloqueur de faisceau (310) a la forme d'un cylindre creux qui peut pivoter autour d'un axe transversal perpendiculairement à au moins un axe longitudinal (z) de telle sorte que le bloqueur de faisceau (310) libère le trajet lumineux du faisceau laser (1) dans un état non pivoté et bloque le trajet lumineux du faisceau laser (1) dans un état pivoté, et
- le bloqueur de faisceau (310) comprend un obturateur contenu dans un système de source laser (410) pour générer le faisceau laser (1).

9. Dispositif de sécurité selon l'une quelconque des revendications précédentes, où
- l'au moins un système de barrière lumineuse (200, 200A, 200B) et le système d'interruption (300) présentent des ouvertures de passage s'étendant axialement qui laissent libre le trajet lumineux du faisceau laser (1) ; et/ou
- le système de source de lumière (210, 210A, 210B), un miroir annulaire (225) et le système de capteur (220, 220A, 220B) sont disposés de telle manière que le champ lumineux de sécurité (3, 3A, 3B) du système de source de lumière (210, 210A, 210B) s'étend vers le système de capteur (220, 220A, 220B) en passant par le miroir d'anneau circulaire (225).

10. Dispositif de sécurité selon l'une quelconque des revendications précédentes, où
- le système de source lumineuse (210, 210A, 210B) est configuré pour un fonctionnement modulé de telle manière qu'une modulation est imprégnée dans le champ lumineux de sécurité (3, 3A, 3B), et
- le système de capteur (220, 220A, 220B) est couplé à un système d'évaluation qui est mis au point pour détecter la modulation du champ lumineux de sécurité (3, 3A, 3B) et pour générer le signal du capteur (4) seulement lorsque la modulation du champ lumineux de sécurité (3, 3A, 3B) est détectée.

11. Dispositif de sécurité selon l'une quelconque des revendications précédentes, où
- un seul système de barrière lumineuse (200) est prévu, dans lequel le système de source lumineuse (210, 210A, 210B) et le système de capteur (220) sont disposés sur les extrémités d'un trajet lumineux à surveiller du faisceau laser (1) ; ou
- au moins deux systèmes de barrière lumineuse (200, 200A, 200B) sont prévus, qui sont disposés l'un après l'autre sur le trajet lumineux du faisceau laser (1) à surveiller, dans lequel le système de source de lumière (210, 210A, 210B) et le système de capteur (220, 220A), 220B) sont disposés par chacun des au moins deux systèmes de barrière lumineuse (200, 200A, 200B) sur les extrémités respectivement d'une partie (3A, 3B) du champ lumineux de sécurité du trajet lumineux du faisceau laser (1) à surveiller, dans lequel le système d'interruption (300) est couplé à chaque système de barrière lumineuse (200, 200A, 200B) et est disposé pour interrompre le faisceau laser (1) en fonction d'une modification du signal de capteur (4) d'au moins l'un des systèmes de barrière lumineuse (200, 200A, 200B).

12. Dispositif laser (400), comprenant
- un système de source laser (410), qui est mis au point pour générer un faisceau laser (1) le long d'un trajet lumineux, et
- le dispositif de sécurité (100) selon l'une quelconque des revendications précédentes, qui est disposé pour surveiller le trajet lumineux du faisceau laser (1) et pour interrompre le faisceau laser (1) en réaction à un rapprochement d'un objet (2) au faisceau laser (1).

13. Dispositif laser selon la revendication 12, où
- le système de source lumineuse (210, 210A, 210B) de l'au moins un système de barrière lumineuse (200, 200A, 200B) et le système d'interruption (300) font partie du système de source laser (410) et/ou sont couplés de manière solidaire à celui-ci.

14. Application du dispositif de sécurité (100) selon l'une quelconque des revendications 1 à 11 pour sécuriser une surface de fonctionnement entre au moins un système de source laser (410) et un réacteur de fusion (500).

15. Procédé de surveillance d'un trajet lumineux d'un faisceau laser (1) et d'interruption du faisceau laser (1) en réponse à un rapprochement d'un objet (2) au faisceau laser (1), dans lequel le dispositif de sécurité selon l'une quelconque des revendications 1 à 11 est utilisé, avec les étapes :
- de génération de l'au moins un champ lumineux de sécurité (3, 3A, 3B) et de détection de l'au moins un signal de capteur de l'au moins un système de barrière lumineuse (200, 200A), 200B) qui correspond à un champ lumineux de sécurité non perturbé (3, 3A, 3B), et
- d'actionnement du système d'interruption (300) lors d'une modification de l'au moins un signal de capteur (4) consécutive à une couverture au moins partielle de l'au moins un champ lumineux de sécurité (3, 3A, 3B) par l'objet, de telle sorte que le faisceau laser (1) est interrompu.
